# FASCICULE DE BREVET EUROPEEN

(11) **EP 0 918 473 B1**
(45) Date de publication et mention de la délivrance du brevet: **02.05.2003**
(21) Numéro de dépôt: 98924400.9
(22) Date de dépôt: 07.05.1998
(51) Int. Cl.: A23L 3/36, A23B 4/06

(54) **ENCEINTE DE SURGELATION EN CONTINU A TABLES REFRIGEREES SUPERPOSEES**
VORRICHTUNG ZUM KONTINUIERLICHEN TIEFKÜHLEN MIT ÜBEREINANDER ANGEORDNETEN GEKÜHLTEN PLATTEN
CONTINUOUS DEEP FREEZE CHAMBER WITH TIERED-UP REFRIGERATED TABLES

(30) Priorité: 07.05.1997 FR 9705878
(43) Date de publication de la demande: 02.06.1999
(73) Titulaire: DEW, Roger, 75016 Paris (FR)
(72) Inventeur: DEW, Roger, 75016 Paris (FR)
(74) Mandataire: Roman, Michel
(86) Numéro de dépôt international: FR9800922
(87) Numéro de publication internationale: WO98049909

(56) Documents cités:
- WO-A-94/02037
- DE-A- 4 136 570
- FR-A- 2 744 884
- US-A- 4 881 379
- US-A- 5 423 414
- DATABASE WPI Section Ch, Week 9817 Derwent Publications Ltd., London, GB; Class D14, AN 98-192182 XP002072143 -& SE 506 959 C (FRIGOSCANDIA EQUIP AB)

## Description

La présente invention a pour objet une enceinte de surgélation en continu à tables réfrigérées superposées.

Il peut convenir pour tous les types de produits susceptibles d'être surgelés et est en particulier destiné au traitement d'aliments préparés se présentant sous forme de portions individuelles tels que, par exemple, steaks hachés, filets de poisson panés ou non.

La surgélation des produits alimentaires s'effectue le plus souvent en continu dans des tunnels réfrigérés équipés d'un ou de plusieurs convoyeurs à bande. Les produits frais ou préparés contiennent de l'eau qui, en gelant durant le processus de refroidissement, a tendance à provoquer une adhérence sur les bandes transporteuses. En outre, la sublimation de l'eau congelée est responsable d'une certaine déshydratation entraînant une perte de poids des aliments traités et provoquant le givrage des évaporateurs des machines frigorifiques.

Pour les aliments en portions, la technique de surgélation en continu la plus répandue actuellement utilise des convoyeurs hélicoïdaux à mailles faisant progresser les produits dans des tunnels à air ventilé à basse température. Pour obtenir une capacité de production industrielle, des dizaines, voire même des centaines de mètres carrés de surface de convoyeur sont nécessaires pour stocker les produits alimentaires durant le temps exigé par la surgélation à coeur.
Les tunnels de surgélation à convoyeur hélicoïdal (dits "tunnels spirales") sont souvent très encombrants, coûteux et gros consommateurs d'énergie. Ils présentent également l'inconvénient de marquer les produits avec les traces des mailles des convoyeurs.

Le brevet international N° WO 94/02 037 déposé par le demandeur décrit une installation de surgélation à tapis sans fin hélicoïdal dans laquelle les produits à surgeler sont refroidis, avant d'être déposés sur le tapis sans fin, par un ensemble de réfrigération disposé à proximité de l'orifice d'introduction du tunnel et comportant au moins une plaque réfrigérante sur laquelle défile un matériau souple, rectiligne, en feuille, supportant le produit à refroidir.
Cette installation permet de réaliser la surgélation de produits alimentaires en évitant leur déformation en cours de surgélation. Toutefois, en raison de sa conception en deux entités distinctes et de la présence de la plaque réfrigérante, elle s'avère encombrante et d'un prix de revient élevé.

Une autre demande du même inventeur déposée sous le N° FR 96 02 295 concerne un tunnel de surgélation comportant en partie supérieure, à l'intérieur de l'enceinte refroidie, un dispositif de pré-refroidissement constitué d'un film souple non réutilisable défilant sur un support horizontal fixe, en sens inverse de celui du convoyeur à bande ou du lit fluidisé situé au-dessous, l'ensemble étant agencé pour que les produits à surgeler soient préalablement refroidis sur ce film de manière à provoquer une croûte de glace à leur surface, avant d'être surgelés sur le ou les convoyeurs à bande ou par le lit fluidisé.
Ce système permet de réaliser un ensemble de surgélation en continu de type tunnel, dans lequel est évitée la déformation des produits à traiter au cours du processus et les pertes de poids par déshydratation, ainsi que de réduire sensiblement l'accumulation de givre sur les évaporateurs du tunnel. Toutefois, l'équipement ainsi obtenu ayant des dimensions identiques à celles d'un tunnel de surgélation habituel, ne permet pas de résoudre le problème de l'encombrement au sol de l'ensemble, ni celui inhérent à la présence des convoyeurs à bande, en particulier en ce qui concerne les questions d'hygiène.

Il existe de nombreux dispositifs de surgelation de produits alimentaires tels que les représentent les brevets N° DE 4 136 570, N° US 4 881 379 ou N° US 5 423 414 qui n'en sont que des exemples.

La demande DE 4 136 570 (GELAVI) concerne une installation de surgelation constituée d'un tunnel renfermant un premier tapis transporteur sur lequel s'effectue un changement d'état des produits et un second tapis disposé sous le premier et servant à l'achèvement de la congélation des produits et aussi d'accumulateur. Ces tapis transporteurs étant constitués d'une bande sans fin en matériau du genre polyamide type "Kevlar".
Des plénums de distribution sont disposés au-dessus des tapis pour souffler de l'air froid perpendiculairement à la surface des tapis, et des collecteurs sont disposés sous lesdits brins supérieurs pour canaliser l'air sous le tapis et congeler la face inférieure des produits.

Le brevet N° US 4 881 379 (TADAAKI) fait état d'un appareil de réfrigération rapide en continu pour aliments composé d'une enceinte séparée en un compartiment supérieur et un compartiment inférieur par une plaque réfrigérante. Une courroie transporteuse se déplace sur la plaque pour entraîner les aliments. La plaque réfrigérante est refroidie par un tube diposé au-dessous de celle-ci et en contact avec elle. Ainsi les les produits placés sur la courroie transporteuse sont refroidis par dessous. Dans le compartiment supérieur est prévu une plaque de refroidissement de l'air à très basse température sans déplacement de cet air.

Enfin, le brevet N° US 5 423 414 (VAUGHN) décrit une glacière pour sachets contenant un élément liquide ou semi-liquide tel que concentré de tomate, ladite glacière comprenant plusieurs convoyeurs sans fin sensiblement horizontaux, superposés et comportant chacun un tambour disposé au-dessus de l'extrémité d'alimentation du convoyeur situé juste au-dessous.

Le dispositif selon la présente invention, qui a pour objectif de remédier à ces inconvénients, comporte un aspect innovateur qui présente, si on le compare aux techniques actuellement utilisées, un grand intérêt pour l'industrie alimentaire. Il permet en effet de réaliser des installations d'un encombrement au sol extrêmement réduit par rapport au réalisations existantes, assurant la surgélation dans des conditions d'hygiène parfaite tout en évitant la déformation ou le marquage des produits.

L'invention est décrite à la revendication 1.

Il est constitué de plaques creuses superposées en quinconce dans lesquelles un réfrigérant est recyclé, les produits à surgeler défilant successivement sur ces plaques entraînés par des supports minces convoyeurs reposant sur elles et constitués soit de films renouvelables à usage unique débités par des bobines, soit de convoyeurs en boucle conçus pour être remplacés périodiquement, l'air à basse température dans l'enceinte isothermique contenant cet équipement étant diffusé sur les produits pendant leur avancée en contact avec les plaques réfrigérées au moyen de caissons perforés.

Sur les dessins schématiques annexés, donnés à titre d'exemples de formes de réalisation de l'objet de l'invention:
la figure 1 représente en coupe verticale une enceinte de réfrigération à films convoyeurs en boucles,
la figure 2 montre la même enceinte en coupe horizontale
et la figure 3 représente dans les mêmes conditions que pour la figure 1, une enceinte de réfrigération à films renouvelables.

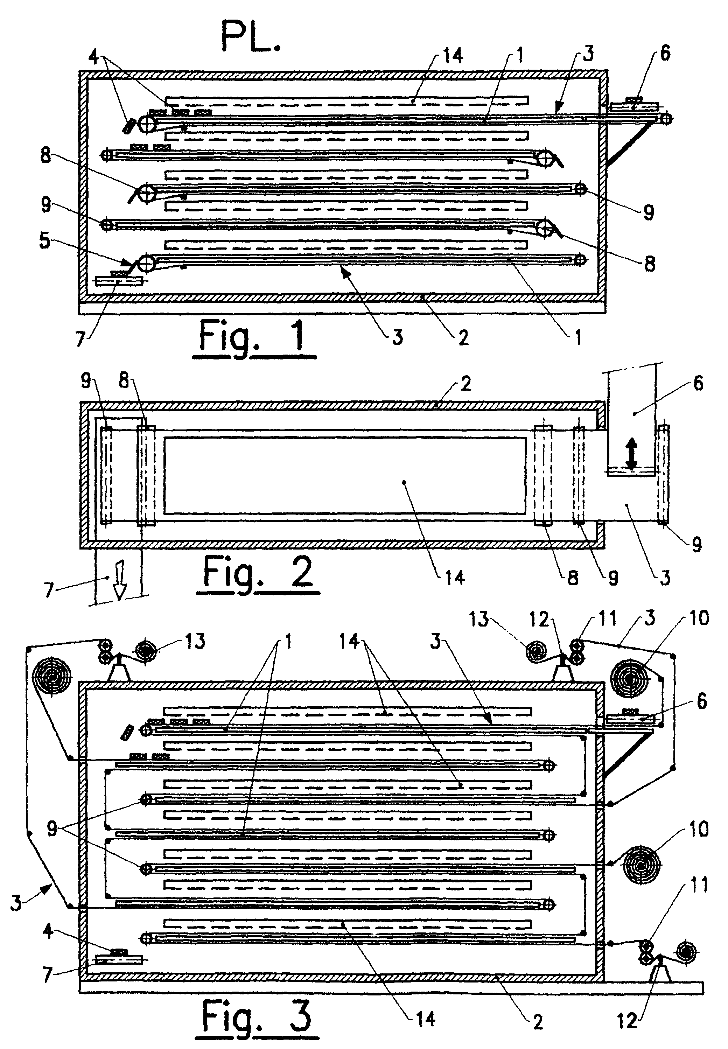

Le dispositif, figures 1 à 3, est constitué d'une série de tables réfrigérées 1 superposées disposées dans une enceinte isolante 2, et sur lesquelles se déplace un support mince 3 assurant la progression des produits alimentaires 4 à surgeler.

Les tables réfrigérées 1 sont formées de plaques creuses dans lesquelles circule un réfrigérant à basse température en circuit fermé. Elles agissent suivant deux effets d'échange thermique, par contact, et en jouant le rôle d'évaporateur à air. Les produits 4 défilent sur les supports minces 3 convoyeurs glissant en contact avec la surface supérieure des plaques. Le sens du mouvement de ces supports minces est inversé d'une table 1 à l'autre et celles-ci sont disposées en quinconce de manière à ce que l'extrémité de sortie de chacune d'elle soit en retrait par rapport à l'extrémité d'entrée de la table située au-dessous. Ainsi, les produits 4 introduits sur la table supérieure vont longer celle-ci sur toute sa longueur, puis tomber sur la table suivante où ils chemineront en sens inverse, et ainsi de suite, en cascade, jusqu'à la table inférieure.
A l'extrémité de chaque table réfrigérée 1, les produits 4 sont soit renversés sur leur face supérieure, soit glissés sur la même face grave à un volet anti-retournement 5.
A titre indicatif, les tables pourront avoir une dimension de 6 x 1,2 mètres, l'enceinte 2 mesurant environ 7 mètres de longueur pour une largeur de l'ordre de 2,6 mètres, ce qui équivaut à un tunnel de réfrigération classique avec convoyeur à bande de 0,5 mètre de large, d'une longueur supérieure à 100 mètres !

A l'entrée de l'enceinte 2, les produits 4 sont étalés sur toute la largeur du support convoyeur 3, perpendiculairement à l'axe longitudinal des tables 1, au moyen d'un convoyeur de chargement 6 de type rétractable à tête mobile. A la sortie, le déchargement se fait au moyen d'un convoyeur d'évacuation 7 également perpendiculaire à l'axe des tables (figure 2).

Les supports minces 3 sont formés de films souples tendus, par exemple en matière plastique. Ils peuvent être conditionnés en boucles passant de façon continue au-dessus et au-dessous de chaque table 1, et conçus pour être remplacés aisément à intervalles réguliers, en principe une fois par jour d'utilisation. Dans ce cas, ils sont entraînés par un tambour moteur 8 placé transversalement en tête de chaque table et passent sur un tambour fou 9 situé à l'autre extrémité (figure 1).

Selon un variante d'exécution, les supports minces sont renouvelables et jetés après chaque utilisation. Ils proviennent alors de bobines débitrices 10 situées à l'extérieur de l'enceinte 2 et cheminent sur une ou plusieurs tables 1 avant de passer sur un tambour de traction 11 motorisé puis sur un mécanisme de tension 12 pour aboutir finalement sur une bobine réceptrice 13 située également à l'extérieur de l'enceinte 2 et actionnée par un moteur esclave. De préférence le système comportera au moins deux paires de bobines 10, 13 dont le film 3 passera sur au moins deux tables séparées par une table recevant le film d'une autre paire de bobines (figure 3).

La surgélation est produite par contact sur la face inférieure des produits 4 et par l'air à basse température de l'enceinte 2, recyclé par des ventilateurs (non représentés) et diffusé sur ces produits par des caissons 14 à face inférieure perforée disposés au-dessus des plaques creuses 1.
Dans certains cas, le refroidissement pourra avantageusement être renforcé par un ou plusieurs évaporateurs de type connu.

Le positionnement des divers éléments constitutifs donne à l'objet de l'invention un maximum d'effets utiles qui n'avaient pas été, à ce jour, obtenus par des dispositifs similaires.

## Revendications

1. Enceinte de surgélation en continu à tables réfrigérées superposées pouvant s'appliquer à tous les produits susceptibles d'être surgelés et est en particulier destiné au traitement d'aliments préparés se présentant sous forme de portions,
**caractérisée par** la combinaison d'une série de tables réfrigérées (1) dans lesquelles un réfrigérant est recyclé en circuit fermé et par des ventilateurs diffusant l'air à basse température dans l'enceinte (2), lesdites tables réfrigérées étant formées de plaques creuses superposées disposées en quinconce à l'intérieur de l'enceinte, les produits (4) à surgeler défilant successivement sur ces plaques entraînés par des supports minces (3) convoyeurs formés de films souples tendus reposant sur elles, la surgélation étant produite par contact sur la face inférieure des produits (4) et par l'air à basse température de l'enceinte (2) recyclé par des ventilateurs.

2. Enceinte de surgélation selon la revendication 1, se caractérisant par le fait qu'elle comporte cinq tables réfrigérées (1) superposées.

3. Enceinte de surgélation selon l'une quelconque des revendications précédentes, se caractérisant par le fait que les supports minces (3) sont de type renouvelable à usage unique provenant de bobines débitrices (10) situées à l'extérieur de l'enceinte (2) et cheminant sur une ou plusieurs tables réfrigérées (1) avant d'aboutir sur une bobine réceptrice (13) située également à l'extérieur de l'enceinte (2).

4. Enceinte de surgélation selon la revendication 3, se caractérisant par le fait que les supports minces (3) passent sur un tambour de traction (11) motorisé puis sur un mécanisme de tension (12) avant d'arriver sur la bobine réceptrice (13), cette dernière étant actionnée par un moteur esclave.

5. Enceinte de surgélation selon la revendication 3, se caractérisant par le fait qu'elle comporte au moins deux paires de bobines débitrice (10) et réceptrice (13) dont le support mince (3) passe sur au moins deux tables réfrigérées (1) séparées par une table réfrigérée recevant le support mince d'une autre paire de bobines (10, 13).

6. Enceinte de surgélation selon l'une quelconque des revendications précédentes, se caractérisant par le fait que les produits (4) sont étalés sur toute la largeur du support mince (3), perpendiculairement à l'axe longitudinal des tables réfrigérées (1), au moyen d'un convoyeur de chargement (6) de type rétractable à tête mobile, le déchargement se faisant à la sortie au moyen d'un convoyeur d'évacuation (7) également perpendiculaire à l'axe des tables.

7. Enceinte de surgélation selon l'une quelconque des revendications précédentes, se caractérisant par le fait que le sens du mouvement des supports minces (3) est inversé d'une table réfrigérée (1) à la suivante, celles-ci étant disposées de manière à ce que l'extrémité de sortie de chacune d'elle soit en retrait par rapport à l'extrémité d'entrée de la table située au-dessous, de façon à ce que les produits (4) introduits sur la table supérieure longent celle-ci sur toute sa longueur, puis tombent sur la table suivante où ils chemineront en sens inverse, et ainsi de suite, en cascade, jusqu'à la table inférieure.

8. Enceinte de surgélation selon l'une quelconque des revendications précédentes, se caractérisant par le fait que l'air à basse température de l'enceinte (2) est diffusé sur les produits (4) par des caissons (14) à face inférieure perforée disposés au-dessus des tables réfrigérées (1).

9. Enceinte de surgélation selon l'une quelconque des revendications précédentes, se caractérisant par le fait que les supports minces (3) sont constitués de films souples en matière plastique.

10. Enceinte de surgélation selon l'une quelconque des revendications précédentes, se caractérisant par le fait que les tables réfrigérées (1) ont une dimension voisine de 6 x 1,2 mètres, et que l'enceinte (2) mesure environ 7 mètres de long et 2,6 mètres de large.

## Patentansprüche

1. Kontinuierlich arbeitende Frosterkammer mit übereinanderliegenden Kühlplatten, geeignet für alle gefrierbaren Produkte, insbesondere für vorbereitete Nahrungsmittel, die in Form von Portionen vorliegen,
**gekennzeichnet durch** die Kombination einer Reihe von Kühlplatten (1), in denen ein Kühlmittel in geschlossenem Kreislauf umläuft, **durch** Ventilatoren, die Luft mit niedriger Temperatur in die Kammer (2) blasen, wobei die Kühlplatten übereinanderliegende, in der Kammer gegeneinander versetzt angeordnete, hohle Platten sind, die zu gefrierenden Produkte (4), die nacheinander über diese Platten laufen, angetrieben von dünnen Transportunterlagen (3), die aus gespannten, weichen, auf den Platten aufliegenden Folien bestehen, wobei das Gefrieren **durch** Kontakt auf der Unterseite der Produkte (4) und **durch** die kalte, von Ventilatoren umgewälzte Luft in der Kammer (2) erfolgt.

2. Frosterkammer gemäß Anspruch 1, **gekennzeichnet dadurch, dass** sie fünf übereinanderliegende Kühlplatten (1) besitzt.

3. Frosterkammer gemäß einem der vorstehenden Ansprüche, **gekennzeichnet dadurch, dass** die dünnen Unterlagen (3) erneuerbar und für den einmaligen Gebrauch bestimmt sind und von außerhalb der Kammer (2) liegenden Abwickelspulen kommen, über eine oder mehrere Kühlplatten (1) laufen und schließlich zu einer Aufwickelspule (13) gelangen, die ebenfalls außerhalb der Kammer (2) liegt.

4. Frosterkammer gemäß Anspruch 3, **gekennzeichnet dadurch, dass** die dünnen Unterlagen (3) über eine angetriebene Zugrolle (11) und eine Spannvorrichtung (12) laufen, bevor sie an der Aufwickelspule (13) ankommen, die von einem nachgeführten Motor angetrieben wird.

5. Frosterkammer gemäß Anspruch 3, **gekennzeichnet dadurch, dass** sie mindestens zwei Paar Abwickelspulen (10) und Aufwickelspulen (13) besitzt, deren dünne Unterlage (3) mindestens über zwei Kühlplatten (1) läuft, zwischen denen eine Kühlplatte liegt, die ihre dünne Unterlage von einem anderen Paar Spulen (10, 13) empfängt.

6. Frosterkammer gemäß einem der vorstehenden Ansprüche, **gekennzeichnet dadurch, dass** die Produkte (4) mittels einer zurückfahrbaren Ladevorrichtung (6) mit beweglichem Kopf auf der gesamten Breite der dünnen Unterlage (3) quer zur Längsachse der Kühlplatten (1) ausgebreitet werden, und das Entladen am Ausgang mittels einer Entladevorrichtung (7) ebenfalls quer zur Achse der Platten erfolgt.

7. Frosterkammer gemäß einem der vorstehenden Ansprüche, **gekennzeichnet dadurch, dass** die Laufrichtung der dünnen Unterlagen (3) einer Kühlplatte (1) der Laufrichtung auf der nächsten jeweils entgegengesetzt ist, wobei die Platten so angeordnet sind, dass das ausgangsseitige Ende jeder Platte in bezug auf das darunter liegende eingangsseitige Ende der Kühlplatte zurücksteht, so dass die auf die obere Platte aufgebrachten Produkte (4) die gesamte Länge dieser Platte durchlaufen, dann auf die nächste Platte herabfallen, wo sie in die entgegengesetzte Richtung laufen und so weiter, in mehreren Stufen, bis zur untersten Platte.

8. Frosterkammer gemäß einem der vorstehenden Ansprüche, **gekennzeichnet dadurch, dass** die Luft mit niedriger Temperatur in der Kammer (2) durch über den Kühlplatten (1) angeordnete Kassetten (14) mit perforierter Unterseite auf die Produkte (4) verteilt wird.

9. Frosterkammer gemäß einem der vorstehenden Ansprüche, **gekennzeichnet dadurch, dass** die dünnen Unterlagen (3) aus weichen Kunststofffolien bestehen.

10. Frosterkammer gemäß einem der vorstehenden Ansprüche, **gekennzeichnet dadurch, dass** die Kühlplatten (1) eine Größe von etwa 6 x 1,2 Metern haben und dass die Kammer (2) etwa 7 Meter lang und 2,6 Meter breit ist.

## Claims

1. Continuous deep freeze chamber with tiered-up refrigerating tables applicable to all products that can be deep frozen and particularly for treating prepared food in the form of individual portions,
**characterized by** the combination of a series of refrigerating tables (1) wherein a refrigerating agent is recirculated in a closed circuit by fans diffusing low temperature air into chamber (2), the said refrigerating tables being formed of hollow tiered-up trays in a staggered tiered-up arrangement inside the chamber, products (4) to be deep frozen running past in succession on these trays driven by thin conveyor supports (3) consisting of flexible tensioned film laying on them, the deep freeze action being created by contact with the underside of products (4) and by the low temperature of the air in chamber (2) recirculated by the fans.

2. Deep freeze chamber according to claim 1, **characterized in that** it consists of five tiered-up refrigerating tables (1).

3. Deep freeze chamber according to any one of the aforesaid claims **characterized in that** thin supports (3) are of a renewable type for once only use delivered by reels (10) positioned outside chamber (2) and supplying one or several refrigerating tables (1) before reaching a receiving reel (13) also positioned outside chamber (2).

4. Deep freeze chamber according to claim 3, **characterized in that** thin supports (3) pass over a motor-driven draw-in drum (11) then over a tensioning mechanism (12) before reaching receiving reel (13), the latter being operated by a slave motor.

5. Deep freeze chamber according to claim 3 **characterized in that** it comprises two pairs of feed reels (10) and receiving reels (13) whose thin support (3) passes over at least two refrigerating tables (1) separated by a refrigerating table receiving the thin support from another pair of reels (10,13).

6. Deep freeze chamber according to any one of the aforesaid claims **characterized in that** products (4) are spread over the full width of thin support (3), perpendicular to the longitudinal axis of refrigerating tables (1), by means of a loading conveyor (6) of a retractable type with mobile head, unloading taking place at the exit by an evacuation conveyor (7) also positioned perpendicular to the axis of the tables.

7. Deep freeze chamber according to any one of the aforesaid claims **characterized in that** the direction of movement of thin supports (3) is reversed from one refrigerating table (1) to the next, these being arranged so that the exit end of each one of them is set back relative to the entrance end of the table placed underneath, so that products (4) on the upper table run along its full length and then fall onto the next table where they are moved in the opposite direction, and so on in a cascade arrangement, until reaching the lower table.

8. Deep freeze chamber according to any one of the aforesaid claims **characterized in that** the low temperature air in chamber (2) is diffused over products (4) by means of boxes (14) with perforated underside arranged above refrigerating tables (1).

9. Deep freeze chamber according to any one of the aforesaid claims **characterized in that** thin supports (3) consist of flexible plastic films.

10. Deep freeze chamber according to any one of the aforesaid claims **characterized in that** refrigerating tables (1) measure close to 6 x 1.2 m, and that chamber (2) measures around 7m long and 2.6 m wide.
